# EUROPEAN PATENT APPLICATION

(11) **EP 4 495 448 A1**
(43) Date of publication of application: **22.01.2025**
(21) Application number: 24177315.9
(22) Date of filing: 22.05.2024
(51) Int. Cl.: F16D 55/22, F16D 65/00

(54) **BRAKE CALIPER**

(30) Priority: 18.07.2023 KR 20230093011
(71) Applicant: HL Mando Corporation, Pyeongtaek-si, Gyeonggi-do 17962 (KR)
(72) Inventor: AHN, Dongkyun, 06517 Seoul (KR)
(74) Representative: BCKIP Part mbB

(57) **Abstract**

A brake caliper includes a pair of brake pads disposed at both sides of a disc (50), a caliper housing (20) in which at least a part of the brake pads is disposed and which covers at least a part of the disc and a dust capturing device (10) configured to capture dust caused by the disc and the brake pads in contact with each other. The dust capturing device includes a filter housing disposed to face an outer circumferential surface of the disc and a filter module coupled to the filter housing. The filter module may be snap-coupled to a filter accommodation part provided at the filter housing. The filter module and the filtering housing may have a slide-coupling to be coupled to each other.

## Description

### TECHNICAL FIELD OF THE INVENTION

The present invention generally relates to a brake caliper, and more specifically, to a brake caliper which can stably capture dust caused by friction between a brake pad and a disc and improve easiness of maintenance.

### BACKGROUND

Nowadays, eco-friendliness is emerging as an important issue in the vehicle industry as the importance of protecting the environment is highlighted, and regulations on pollutants discharged from vehicles are also continuously being stricter.

The pollutants discharged from vehicles may be categorized into pollutants discharged from exhaust systems and pollutants discharged from non-exhaust systems. The pollutants discharged from the exhaust systems have been regulated as pollutants contained in exhaust gases generated during the engine operation of the vehicle, and it is expected that regulations on the pollutants discharged from the non-exhaust systems will also be legislated in recent years.

A typical pollutant discharged from the non-exhaust systems is dust generated by a brake system. Specifically, in a disc brake which is the brake system mounted on a vehicle, brake pads are in contact with and pressed against both sides of a disc which rotates with a wheel to obtain a braking force by friction or a clamping pressure between the disc and the brake pads. In this case, dust is generated due to abrasion by friction between the disc and a brake paddle which is known to contain a large number of components harmful to the human body.

In addition, monoblock brake calipers having high rigidity and braking force have been developed and applied to high-performance vehicles. In such a monoblock brake caliper, since friction or a clamping pressure between the disc and the brake pads further increases, an amount of dust generated may increase further.

Accordingly, dust or fine dust generated from a brake system may need to be effectively captured or collected and the maintenance for the dust by a user such as a driver may need to be easily performed.

### SUMMARY OF THE INVENTION

Therefore, it is an object of the present invention to provide a brake caliper capable of capturing dust generated by friction between a disc and a brake pad.

It is another object of the present invention to provide a brake caliper capable of suppressing and minimizing external spread of dust generated by friction between a disc and a brake pad.

It is still another object of the present invention to ease the maintenance of a brake caliper because a filter module is detachably attached to the brake caliper.

It is still another object of the present invention to provide a brake caliper capable of improved marketability and competitiveness.

It is still another object of the present invention to provide a brake caliper having a simple structure that helps to improve productivity and assemblability of a product.

To this end, the present invention provides a brake caliper in accordance with claim 1.

In accordance with an aspect of the present invention, a brake caliper includes a pair of brake pads to be disposed at both sides of a brake disc, a caliper housing in which the brake pads are disposed and which is designed and configured to surround at least a part of the disc, and a dust capturing device configured to capture dust generated by the disc and the brake pads in contact with each other, wherein the dust capturing device includes a filter housing disposed to face an outer circumferential surface of the disc and a filter module coupled to the filter housing.
The filter module may be snap-coupled to a filter accommodation part provided in the filter housing.

The filter module may include a filter member and a cage in which the filter member is supported.

At least one clip may be formed to protrude outward from the cage, and a clip groove where the clip is inserted and fastened may be formed to be recessed in the filter housing. Thereby, the filter module may easily be disassembled from the filter housing, for example, to replace the filter of the filter module.

The clip may be formed on a side end portion of the cage, and the clip groove may be formed in a side end portion of the filter housing.

The filter accommodation part may be formed to be recessed in or pass through a central portion of the filter housing in a radial direction.

A plurality of flow holes may be formed to pass through the cage. The holes formed in the cage may be disposed and configured such that an airflow with which the dust of the brake pad is transported is passed to the filter member.

The cage may include a first cage part forming an outer surface of the cage in a radial direction and a second cage part forming an inner surface of the cage in the radial direction, and the filter member may be accommodated between the first cage and the second cage. When the brake caliper is assembled with a disc, the second cage part may be disposed facing the disc in the radial direction, and the first cage part may be disposed facing away from the disc in the radial direction.

The first cage and the second cage may be snap-coupled. This further eases disassembly and reassembly of the cage and replacement of the filter, for example.

At least one cage clip may be formed to protrude from any one of the first cage part and the second cage part, and a cage clip groove where the cage clip is inserted and fastened may be formed to be recessed in the other of the first cage and the second cage.

A plurality of flow holes may be formed to pass through each of the first cage and the second cage.

When the brake caliper is assembled in an axle assembly, the filter housing may be supported by an axle mounting structure, which may include a fixing part of a vehicle body.

The fixing part may be formed as a knuckle.

The filter housing may include a first filter housing, which may be provided for being disposed inside the vehicle body, and a second filter housing, which may be provided for being disposed outside the vehicle body, and the first filter housing and the second filter housing may be formed to extend toward a leading part and a trailing part of the caliper housing. The leading part and the trailing part may be opposite end portions of the caliper housing in a circumferential direction.

At least one of the first filter housing and the second filter housing may include a maintenance hole formed to be open so that the caliper housing is partially exposed outward, e.g., an outer surface of the caliper housing may be exposed through the maintenance hole. Thereby, access to the caliper housing for maintenance may be eased.

The filter accommodation part and the filter module may be provided as a plurality of filter accommodation parts and a plurality of filter modules, respectively.

In accordance with an embodiment, a brake caliper includes a pair of brake pads provided to be disposed at both sides of the disc, a caliper housing in which the brake pads are disposed and which is configured and designed to surround at least a part of the disc, and a dust capturing device configured to capture dust generated by the disc and the brake pads in contact with each other, wherein the dust capturing device includes a filter housing disposed to face an outer circumferential surface of the disc and a filter module coupled to the filter housing, and the filter module is slidably coupled to a filter accommodation part provided in the filter housing.

The filter module may include a filter member and a cage in which the filter member is supported.

The cage may include a slide groove formed to be recessed therein to allow an edge of the filter accommodation part to be inserted into and moved in the slide groove. Thereby, the filter module may easily be disassembled from the filter housing, e.g., for replacing the filter module.

The filter housing may include a first filter housing, which may be provided for being disposed inside a vehicle body, and a second filter housing, which may be provided for being disposed outside the vehicle body, the filter accommodation part may be formed in each of the first filter housing and the second filter housing, at least a part of the slide groove may be coupled to an edge of the filter accommodation part formed in any one of the first filter housing and the second filter housing, and the remaining part may be coupled to an edge of the filter accommodation part formed in the other of the first filter housing and the second filter housing.

The filter housing may include a first filter housing, which may be provided for being disposed inside the vehicle body, and a second filter housing, which may be provided for being disposed outside the vehicle body, the filter accommodation part may be formed in the second filter housing, the slide groove may be coupled to the edge of the filter accommodation part of the second filter housing, and the second filter housing may be coupled to and supported by the first filter housing.

The slide groove may be formed to extend in an axial direction.

A disc brake may include a disc configured to be coupled to a wheel and rotatable with the wheel about a rotational axis, and the brake caliper in accordance with the present invention, wherein the brake pads are disposed at both sides of the disc, the caliper housing surrounds at least a part of the disc, and the filter housing faces an outer circumferential surface of the disc.

An axle assembly may include an axle mounting structure, such as a knuckle, and the disc brake described above, wherein the brake caliper is mounted to the mounting structure. The dust capturing device may be mounted to the axle mounting structure or to the caliper housing.

An axial direction, generally, may be parallel to an axis of rotation of the disc. A radial direction may extend transverse or perpendicular to the axial direction, and a circumferential direction may extend transverse to the axial direction and the radial direction.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a front view illustrating an axle assembly of a vehicle comprising a brake caliper to or on which a dust capturing device is mounted according to an embodiment of the present invention;
FIG. 2 is a rear view illustrating the axle assembly of FIG. 1;
FIG. 3 is a perspective view illustrating the axle assembly of FIG. 1 ;
FIG. 4 is an exploded perspective view illustrating a filter housing of a dust capturing device of a brake caliper according to an embodiment of the present invention;
FIG. 5 is an exploded perspective view illustrating a cage of a filter module of a dust capturing device of a brake caliper according to an embodiment of the present invention;
FIG. 6 is a cross-sectional view illustrating a filter module of a dust capturing device of a brake caliper according to an embodiment of the present invention;
FIG. 7 is an exploded perspective view illustrating a dust capturing device of a brake caliper according to an embodiment of the present invention;
FIG. 8 is a perspective view illustrating a dust capturing device of a brake caliper according to another embodiment of the present invention;
FIG. 9 is an exploded perspective view illustrating the dust capturing device of FIG. 8;
FIG. 10 is a cross-sectional view illustrating the dust capturing device of FIG. 8;
FIG. 11 is a perspective view illustrating a brake caliper to or on which a dust capturing device is mounted according to still another embodiment of the present invention; and
FIG. 12 is a rear view illustrating the brake caliper of FIG. 11.

### DETAILED DESCRIPTION OF EXEMPLARY EMBODIMENTS

Hereinafter, embodiments of the present invention will be described in detail with reference to the accompanying drawings. The following embodiments are to explain the present invention to those skilled in the art. The present invention is not limited to the embodiments disclosed herein and may be implemented in different forms. In the drawings, portions which are not related to the description may be omitted for clarifying the present invention, and sizes of components may be exaggerated for facilitating understanding of the present invention.

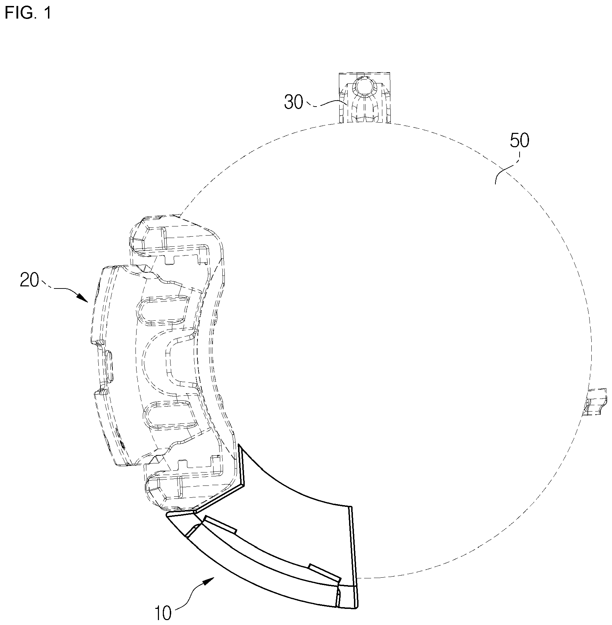

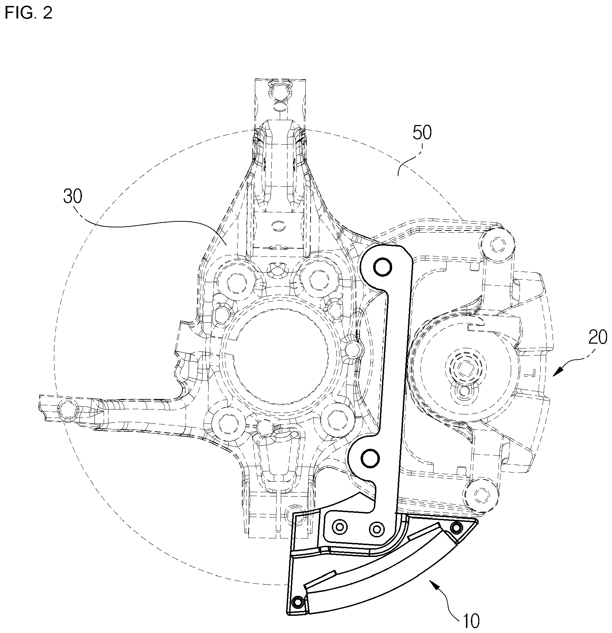

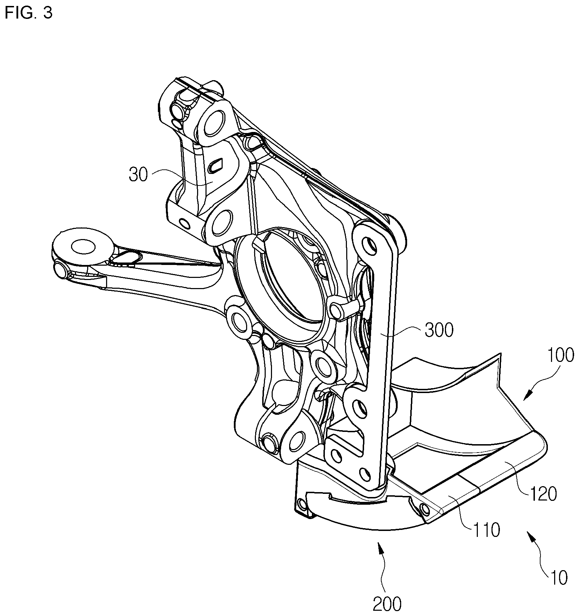

FIG. 1 is a front view illustrating an axle assembly of a vehicle including a brake caliper on which a dust capturing device is mounted, and FIGS. 2 and 3 are a rear view and a perspective view, respectively, illustrating the brake caliper on which the dust capturing device is mounted.

The axle assembly includes an axle mounting structure such as a knuckle 30 and a disc brake. The disc brake includes a brake disc 50 configured to rotate with a wheel about a rotational axis, and a brake caliper.

Referring to FIGS. 1 to 3, the brake caliper may include a carrier , a caliper housing 20, a pair of brake pads (not shown), and a dust capturing device 10. In the axle assembly, the carrier is fixedly installed to the axle mounting structure, e.g., to the knuckle or another part of a vehicle body forming the axle mounting structure.

The housing may be slidable coupled to the carrier so as to be movable in an axial direction which may be parallel to the rotational axis of the brake disc 50. A pressing member, such as a piston, may be installed on the caliper housing 20 to move forward or backward. The caliper housing may comprise a passage for receiving the disc 50 therein. Generally, the caliper housing may be configured or designed to cover at least a part of the brake disc 50.

The brake pads are disposed in the caliper housing 20. For example, at least one of the brake pads may be movably guided in the caliper housing in the axial direction. The brake pads may, for example, be positioned on opposite sides of the passage of the caliper housing 20. Generally, the brake pads may be disposed on both, opposite sides of the disc 50.

The brake disc 50 is configured to rotate together with the wheel of the vehicle. The pair of brake pads may include a first or inner brake pad and a second or outer brake pad, which are disposed at or on both sides of the disc. Each brake pad may include a friction pad and a pad plate on which the friction pad is installed. For example, the inner friction pad and the outer friction pad may be fixedly installed on an inner pad plate and an outer pad plate, respectively. Specifically, the friction pads are attached to inner surfaces (i.e. surfaces facing the passage, that is, the brake disc) of the pad plates. An outer surface of the inner pad plate may be disposed to be in contact with the pressing member such as a piston, and the outer pad plate is installed on an inner rear surface of the caliper housing 20, which will be described below, with the outer brake pad. Accordingly, when a braking operation is performed, the pressing member moves forward to press the inner brake pad toward the brake disc 50 so that the inner brake pad, in particular, its friction pad, comes into close contact with the brake disc. Due to a reaction force, the caliper housing 20 may slide with respect to the carrier in a direction opposite to a forward direction of the pressing member so that the outer brake pad installed in the caliper housing 20 is pressed, in particular with its friction pad, against and be in close contact with the brake disc 50.

For example, the pressing member may be provided as a piston and may be configured to be movable in the axial direction forward or backward in a cylinder provided in the caliper housing 20. The pressing member may be moved forward or backward by a hydraulic pressure of a pressing medium such as a brake oil or a mechanical force to brake the vehicle or moved forward by receiving power from a motor to brake the vehicle. In addition, the pressing member may move backward to release the braking of the vehicle when the hydraulic pressure of the pressing medium is released or move backward by receiving power from the motor to release the braking or a parking brake state of the vehicle.

The caliper housing 20 may include the cylinder in which the piston is disposed to be movable forward or backward, and the brake pads are disposed inside the caliper housing 20. The caliper housing 20 may be connected to and supported by the carrier through a guide member and may also be slidable with respect to the carrier by the guide member in forward and backward directions. The dust capturing device, which will be described below, may be provided on, for instance, but not limited to, at least one of a first or leading portion and a second trailing portion of the caliper housing 20 with respect to a circumferential direction, and a detailed description thereof will be given below.

The dust capturing device 10 is configured to capture dust caused or generated by the disc and the brake pads by being in contact with each other. The dust capturing device 10 is provided around the disc 50 or disposed around or coupled to the caliper housing 20 of the brake caliper to capture dust caused or generated by the disc and the brake pads in contact with each other in order to suppress and minimize the spread of hazardous substances.

Referring to FIGS. 1 to 3, the dust capturing device 10 may include a filter housing 100, a filter module 200, and a bracket 300. At least a part of the filter housing 100 may be disposed to face or cover an outer circumferential surface of the disc 50. The filter module 200 may be coupled to the filter housing 100. The bracket 300 may be mounted to a fixing part of the axle mounting structure, for example, the vehicle body, a fixture or a part of the vehicle or a body of the vehicle, and the filter housing 100 may be coupled to the bracket 300. As exemplarily shown in FIG. 3, the bracket 300 may be a longitudinally extending part, wherein a first end portion of the bracket 300 is mounted to the fixing part, and a second end portion of the bracket 300 may be connected with the filter housing 100.

At least a part of the filter housing 100 is disposed to face an outer circumferential surface of the disc 50. For example, the filter housing 100 is disposed to be spaced apart from the outer circumferential surface of the disc 50 in a radial direction which extends transverse to the axial direction. A cross section of the filter housing 100 may be substantially "U" or "V" shaped and surround at least a part of an outer side of the outer circumferential surface of the disc 50 in the radial direction and at least a part of a first or inner surface and a second or outer surface of the disc 50 facing in the axial direction. For example, the filter housing 100 may comprise an outer circumferential surface facing the outer circumferential surface of the disc 50 and opposite sidewall surfaces facing the inner and the outer surface of the disc 50, respectively. The filter housing 100 may be divided into a first filter housing 110 and a second filter housing 120 formed by separate pieces. A detailed description thereof will be given below.

In addition, the filter module 200 may be coupled to and supported by the filter housing 100, and the filter housing 100 may be mounted on or to the vehicle by the bracket 300. One side of the bracket 300 may be mounted on or to a fixing part of the vehicle body, a fixture or a part of the vehicle or a body of the vehicle, and the other side of the bracket 300 may be connected and coupled to the filter housing 100, as described above. For instance, the fixing part of the vehicle body may be a knuckle 30 on or to which the caliper housing 20 is mounted as illustrated in FIGS. 1 to 3, although not required. As the bracket 300 is fixedly mounted on or to the knuckle 30 of the vehicle body, the filter housing 100 may be positioned in a portion adjacent to the caliper housing 20 or the disc 50. Generally, irrespective of the structure to which the filter housing is attached, the filter housing 100 may be positioned adjacent to the caliper housing 20 and/or the disc 50.

Hereinafter, the dust capturing device 10 will be described in detail.

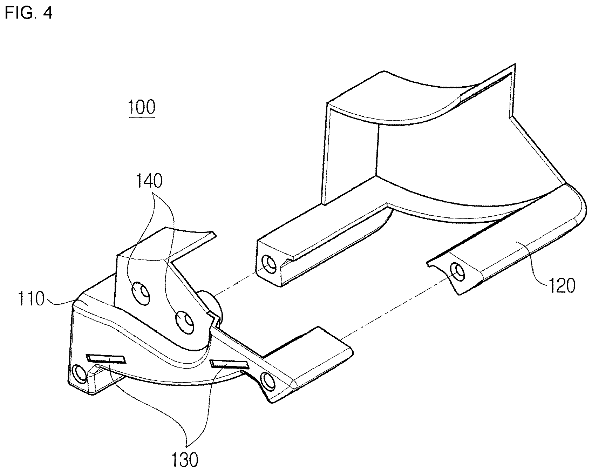

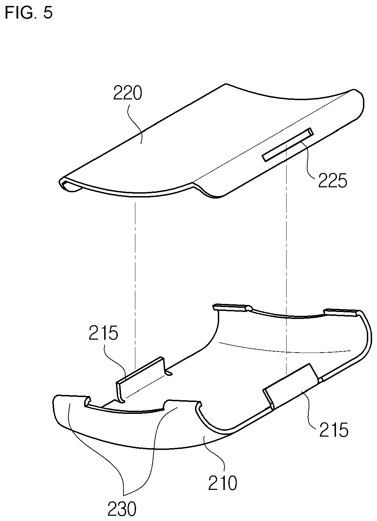

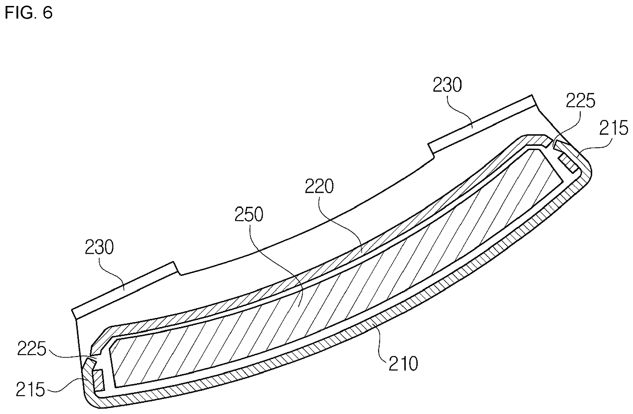

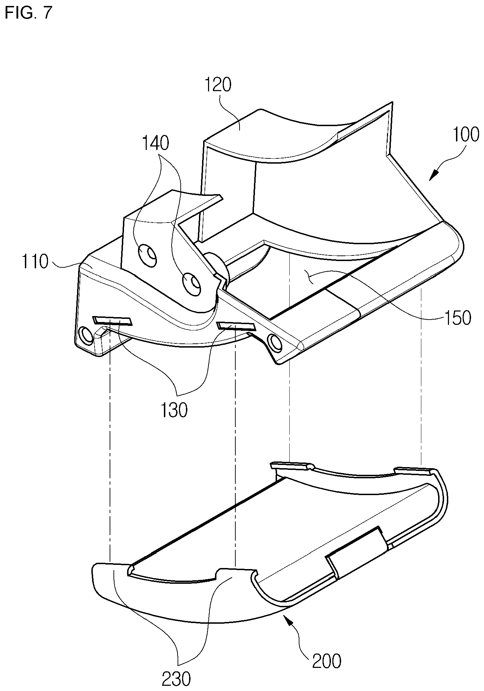

FIG. 4 is an exploded perspective view illustrating the filter housing, FIG. 5 is an exploded perspective view illustrating a cage of the filter module, FIG. 6 is a cross-sectional view illustrating the filter module, and FIG. 7 is an exploded perspective view illustrating the dust capturing device.

Referring to FIG. 4, the filter housing 100 may include the first filter housing 110 and the second filter housing 120. At least a part of the first filter housing 110 may optionally be disposed inside the vehicle body, and at least a part of the second filter housing 120 may optionally be disposed outside the vehicle body.

The first filter housing 110 may include an inner wall surface facing the inner surface of the disc 50 and an outer circumferential surface facing the outer circumferential surface of the disc 50. The second filter housing 120 may include an outer wall surface facing an outer surface of the disc 50 and an outer circumferential surface facing the outer circumferential surface of the disc 50. The first filter housing 110 and the second filter housing 120 may be coupled to each other to form a body such as a single piece body in which the filter module 200 is accommodated and supported and formed in a shape of surrounding or covering at least a part of an inner surface, an outer surface, and an outer circumferential surface of the disc 50. In addition, the first filter housing 110 and the second filter housing 120 may be substantially arc-shaped and have a shape corresponding to a shape of the disc 50.

The filter housing 100 may be mounted on or to the vehicle, e.g., to the axle mounting structure, by or through the bracket 300. To this end, a bracket coupling hole 140 to which the bracket 300 is mounted and coupled using a fastening member or fastener such as a bolt may be provided in the first filter housing 110. FIG. 4, by way of example only, shows a pair of coupling bracket coupling holes 140 formed in the first filter housing 110. The second filter housing 120 may be coupled to the first filter housing 110. The first filter housing 110 and the second filter housing 120 may be coupled to each other using a fastening member or fastener such as a bolt.

The filter module 200 is provided to be coupled to and supported by the filter housing 100 to filter dust caused or generated by the disc and the brake pads in contact with each other. Referring to FIGS. 5 and 6, the filter module 200 may include a filter member 250 having a filter and a cage configured to support the filter member 250.

The filter member 250 having the filter may receive air containing the dust caused or generated by the disc and the brake pads in contact with each other to capture the dust and discharge the air, from which the dust is filtered, to the outside of the filter member 250. The filter member 250 may be located or accommodated and supported in the cage, and the cage may form an exterior of the filter module 200 and allow the filter member 250 to be detachably attached to the filter housing 100. The filter member 250 and the cage may be substantially arc-shaped and have a shape corresponding to a shape of the disc 50.

The cage may include a first cage part 210 forming an outer side surface in the radial direction, and a second cage part 220 forming an inner surface in the radial direction. The first cage part 210 and the second cage part 220 may be provided to be detachably attached to each other. the first cage part 210 and the second cage part 220, together, may form an inner accommodation space for accommodating the filter member 250 between the first cage part 210 and the second cage part 220. For example, as exemplarily shown in FIG: 5, the first cage part 210 may include a plate shaped second main member, and the second cage part 220 may include plate shaped second main member, wherein the accommodation space, with respect to the radial direction, is limited by the first and second main members.

For example, the first cage part 210 and the second cage part 220 may be snap-coupled to each other. Specifically, cage clips 215 may be formed on or at a front-end portion and a rear end portion (or any end portion) of the first cage part 210 and have a shape of being bent or protruding from the first cage part 210. For example, the cage clips 215 may protrude from opposite edges of the first main member in a direction transverse to the main member. Cage clip grooves 225 into which the cage clips 215 are inserted may be formed in or at a front-end portion and a rear end portion (or any end portion) of the second cage part 220, respectively. For example, the cage clip grooves 225 may be formed as a hole passing through the second cage part 220 or a recess recessed from a surface of the second cage part 220. The cage clips 215 may be configured to be elastically deformable to be snap-coupled such that parts of the cage clips 215 are deformed when the cage clips 215 are being inserted into the cage clip grooves 225. Accordingly, the cage clips 215 may be inserted into and snap-coupled to the cage clip grooves 225 so that the first cage part 210 and the second cage part 220 may be coupled to each other.

As described above, as the cage clips 215 are integrally formed with the first cage part 210 by having a shape of being bent or protruding from the first cage part 210, and the cage clip grooves 225 are integrally formed with the second cage part 220 as a hole passing through the second cage part 220 or a recess recessed from a surface of the second cage part 220, the first cage part 210 and the second cage part 220 may be directly snap-coupled without a separate fastening member. Therefore, the structure of the filter module 200 can be simplified, and smooth maintenance such as easy replacement of the filter member 250 can be performed. Alternatively, the first cage part 210 may have cage clip grooves and the second cage part 220 may have cage clips. However, the first cage part 210 and the second cage part 200 can be coupled by any means which is capable of separably coupling or connecting the first cage part 210 and the second cage part 200.

The filter member 250 having a filter may capture or filter dust contained in air. For instance, a plurality of flow holes may be formed to pass through the cage so that air containing dust smoothly can approach the filter member 250, pass through the flow holes and be discharged from the filter member 250. Specifically, the air containing the dust may smoothly approach the filter member 250 through a plurality of flow holes provided in the second cage part 220, and the air from which the dust is filtered may be discharged to the outside of the filter member 250 through a plurality of flow holes provided in the first cage part 210. The flow holes may be formed in any of various shapes as long as the inside and the outside of the cage can communicate with each other, and air can flow therethrough. As an example, the flow holes may be provided in the form of a plurality of slits or nets, or in the form of a plurality of circular holes that are regularly arranged, and in addition, at least some of the circular holes may be formed to pass through the cage to be inclined to smoothly guide an air.

Referring to FIG. 7, the filter module 200 in which the filter member 250 having a filter is accommodated and mounted may be coupled to a filter accommodation part 150 formed in the filter housing 100.

The filter accommodation part 150 may be formed in a central portion of the filter housing 100 to be recessed in or pass through the filter housing 100 in the radial direction. That is, the filter accommodation part 150 may include a receiving opening formed in a part of the filter housing 100 facing in the radial direction. The filter module 200 may be coupled to and supported by the filter accommodation part 150 of the filter housing 100. For example, the filter module 200 may be snap-coupled to the filter accommodation part 150 of the filter housing 100. To this end, clips 230 formed to protrude from both end portions of the cage of the filter module 200 may be provided. For example, first cage part 230 may include rim portions protruding from the first main member on opposite ends thereof, wherein the clips 230 are formed may be formed to protrude from the respective rim portion, as exemplarily shown in FIG. 5. Clip grooves 130 may be formed to be recessed in or pass through a portion of the filter housing 100 adjacent to the filter accommodation part 150, and the clips 230 are inserted into the clip grooves 130 to couple the filter module 200 to the filter housing 100. The clips 230 may be configured to be elastically deformable such that at least parts of the clips 230 can be deformed to be snap-coupled when the clips 230 are inserted into the clip grooves 130. A plurality of clips 230 and a plurality of clip grooves 130 may be provided for stable coupling of the filter housing 100 and the filter module 200. When being coupled to the filter housing 100, the filter module 200 may be positioned in the receiving opening of the accommodation part 150.

As described above, the clips 230 are integrally formed with the cage to be bent or protrude, and the clip grooves 130 are integrally formed to pass through the filter housing 100 or be recessed from a surface of the filter housing 100, the filter module 200 may be directly snap-coupled to the filter housing 100 without a separate fastening member, and thus the structure is simplified, and smooth maintenance such as easy replacement of the filter module 200 can be performed. Alternatively, the filter housing 100 may have clips and the filter module 200 may have clip grooves.

In FIGS. 1 to 7, it is exemplarily illustrated that one filter accommodation part 150 is provided in one filter housing 100, and one filter module 200 is installed in the filter accommodation part 150, but the present invention not limited thereto. Two or more filter accommodation parts can be included in the filter housing 100 and two or more filter modules 200 may be mounted to the filter accommodation part 150, and it should be equally understood even when a plurality of filter accommodation parts 150 are provided in one filter housing 100, and a plurality of filter modules 200 are snap-coupled to and mounted on the filter accommodation part 150. By having a plurality of filter modules 200 mounted on the filter accommodation part 150, the filter modules 200 can be independently replaced depending on the degree of contamination.

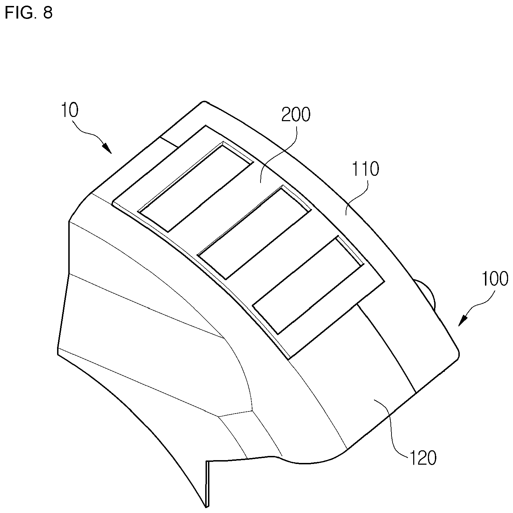

Hereinafter, a further dust capturing device 10 will be described by referring to FIGS. 8 to 10.

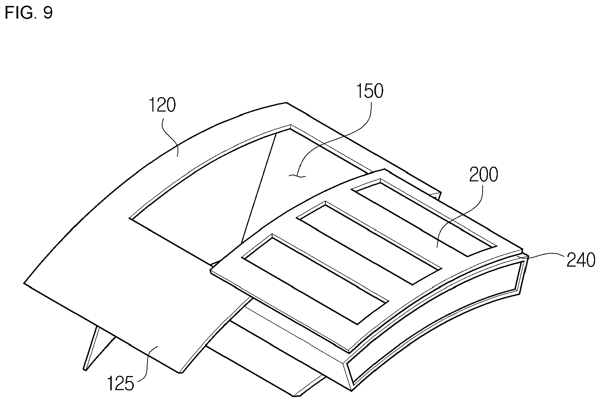

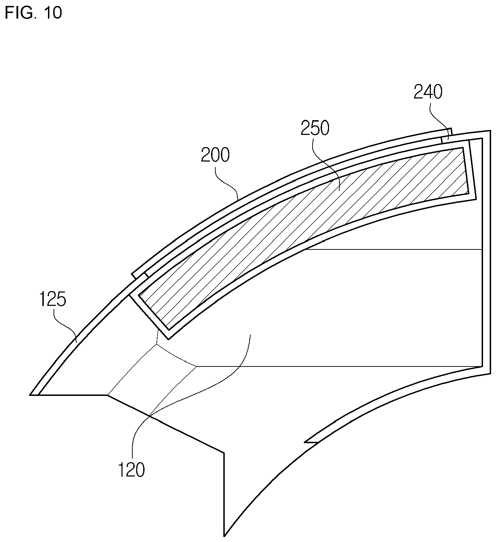

FIG. 8 is a perspective view illustrating a further exemplary dust capturing device, FIG. 9 is an exploded perspective view for illustrating the dust capturing device, and FIG. 10 is a cross-sectional view for illustrating the dust capturing device.

Referring to FIGS. 8 to 10, the dust capturing device 10 may include a filter housing 100, a filter module 200, and a bracket 300. At least a part of the filter housing 100 may be disposed to face the outer circumferential surface of the disc 50 as described above. The filter module 200 may be coupled to the filter housing 100. One side of an end portion of the bracket 300 may be mounted on a fixing part of the axle mounting structure, a fixture or a part of the vehicle or a body of the vehicle, and the other side of the bracket 300 is coupled to the filter housing 100.

Since some of the structures, functions and operations of the dust capturing device, which will be described below, are the same as or similar to those of the dust capturing device described above, certain descriptions overlapped with the above described will be omitted to prevent duplicated descriptions.

At least a part of the filter housing 100 is disposed to face the outer circumferential surface of the disc 50. For instance, the filter housing 100 is disposed to be spaced apart from the outer circumferential surface of the disc 50 in the radial direction, a cross-section of the filter housing 100 may be substantially "U" or "V" shaped and surround at least a part of an outer side of the outer circumferential surface of the disc 50 in the radial direction and a part of the first or inner surface and the second or outer surface of the disc 50. The filter housing 100 may have an outer circumferential surface facing the outer circumferential surface of the disc 50, and opposite sidewall surface facing the first surface and the second surface of disc 50, respectively. The filter housing 100 may be divided into a first filter housing 110 and a second filter housing 120 formed by separate pieces.

The filter module 200 may be coupled to and supported by the filter housing 100, and the filter housing 100 may be mounted on or to the vehicle, e.g., to the axle mounting structure, by the bracket 300. One side of the bracket 300 may be mounted on or to a fixing part of the axle mounting structure such as a knuckle 30 of the vehicle body, a fixture or a part of the vehicle or a body of the vehicle, and the other side of the bracket 300 may be connected and coupled to the filter housing 100. Accordingly, the filter housing 100 may be disposed in a portion adjacent to the caliper housing 20 and/or the disc 50.

The first filter housing 110, optionally, may be disposed inside the vehicle body. The first filter housing 110 may include an inner wall surface facing an inner surface of the disc 50 and an outer circumferential surface facing the outer circumferential surface of the disc 50. The second filter housing 120, optionally, may be disposed outside the vehicle body. The second filter housing 120 may include an outer wall surface facing an outer surface of the disc 50 and an outer circumferential surface facing the outer circumferential surface of the disc 50. The first filter housing 110 and the second filter housing 120 may be coupled to each other to form a body such as a single piece body in which the filter module 200 is accommodated and supported and formed in a shape of surrounding or covering at least a part of an inner surface, an outer surface, and an outer circumferential surface of the disc 50. In addition, the first filter housing 110 and the second filter housing 120 may be arc-shaped and have a shape corresponding to a shape of the disc 50.

The filter housing 100 may be mounted on or to the vehicle by or through the bracket 300. To this end, a bracket coupling hole 140 (not shown in FIGS. 8 to 10) to which the bracket 300 is mounted and coupled using a fastening member or fastener such as a bolt may be provided in the first filter housing 110, and the second filter housing 120 may be coupled to the first filter housing 110 to be mounted on the vehicle. The first filter housing 110 and the second filter housing 120 may be coupled to each other using a fastening member or fastener such as a bolt.

The filter module 200 may be provided to be coupled to and supported by the filter housing 100 to filter dust caused or generated by the disc and brake pads in contact with each other and coupled to a filter accommodation part 150 formed by coupling of the first filter housing 110 and the second filter housing 120.

In the dust capturing device 10 shown in FIGS. 8 to 10, as a part of the filter accommodation part 150 is formed in the first filter housing 110, and the remaining part of the filter accommodation part 150 is formed in the second filter housing 120, the filter accommodation part 150 may be divided by the coupling of the first filter housing 110 and the second filter housing 120. That is, a part of an edge of the filter accommodation part 150 may be formed in the first filter housing 110, and the remaining part of the edge of the filter accommodation part 150 may be formed in the second filter housing 120. A more detailed description thereof will be provided below.

The filter module 200 may include a filter member 250 having a filter and a cage configured to support the filter member 250. The filter member 250 may be slidably coupled to the filter accommodation part 150.

The filter member 250 having a filter may receive air containing dust caused or generated by the disc and the brake pads in contact with each other to capture the dust and discharge the air, from which the dust is filtered, to the outside of the filter member 250. The filter member 250 may be located or accommodated and supported in the cage, and the cage may form an exterior of the filter module 200 and allow the filter member 250 to be detachably attached to the filter housing 100. The filter member 250 and the cage may be substantially arc-shaped and have a shape corresponding to a shape of the disc 50.

The filter member 250 and the filter housing 100 may be slide-coupled to each other. For instance, the filter member 250 may be located or accommodated and supported in the cage, and a slide groove 240 may be formed in an outer surface of the cage so that the edge of the filter accommodation part 150 can be inserted into and moved in the slide groove 240.

As illustrated in FIGS. 9 and 10, the slide groove 240 may be recessed from an outer side surface of the cage and extend in the axial direction. As the edge of the filter accommodation part 150 provided in the first filter housing 110 and the second filter housing 120 is inserted into and moved in the slide groove 240, the filter housing 100 and the filter module 200 may be slidably coupled to each other. Specifically, as illustrated in FIG. 9, the slide groove 240 of the filter module 200 is slidably coupled to the edge of the filter accommodation part 150 formed in the second filter housing 120 in a state in which the first filter housing 110 and the second filter housing 120 are separated, then the first filter housing 110 and the second filter housing 120 are coupled to mount the filter module 200 in or to the filter housing 100 (see FIG. 8).

Alternatively, unlike the example described above, the filter accommodation part 150 may be provided in only one of the first filter housing 110 and the second filter housing 120. In another example, the filter accommodation part 150 may be provided only in the second filter housing 120, and one side of the second filter housing 120 may be open so that the filter module 200 can enter or be inserted into the second filter housing 120, and the slide groove 240 of the filter module 200 may be slidably coupled to the edge of the filter accommodation part 150 of the second filter housing 120. Then, the second filter housing 120 in or to which the filter module 200 is mounted may be coupled to the first filter housing 110 to be supported by or coupled to the vehicle. Generally, the accommodation part 150 may include a receiving opening which circumference is defined by edges of the first and/or the second filter housing 110, 120, and the filter module 200 includes a slide groove 240 which is engaged with a respective edge, which may also be referred to as an engagement edge, defining the receiving opening. In particular, the circumference of the receiving opening may include opposite engagement edges extending in the axial direction, and one slide groove of the filter module 200 may be engaged with one engagement edge, respectively.

As described above, as the slide groove 240 is integrally formed by being recessed from an outer surface of the cage of the filter module 200 and the edge of the filter accommodation part 150 is moved in, inserted into, and slidably coupled to the slide groove 240, the filter module 200 may be mounted and supported in or by the filter housing 100 without a separate fastening member or an additional fastener, and thus a structure can be simplified, and the filter module 200 can be easily replaced with another filter module.

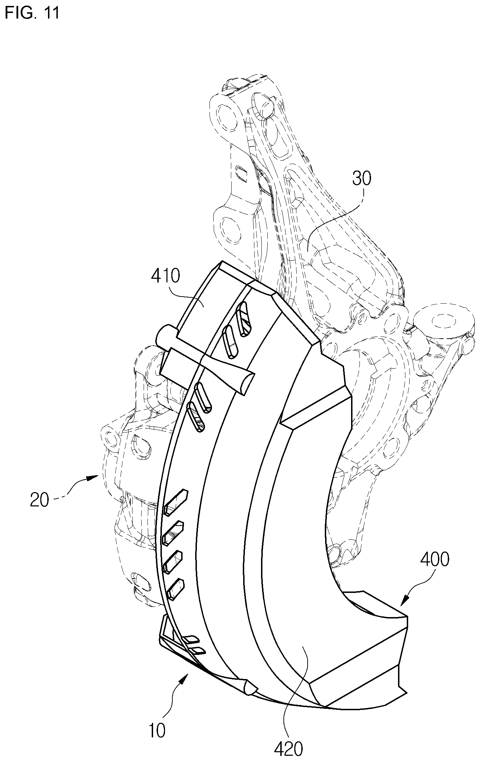

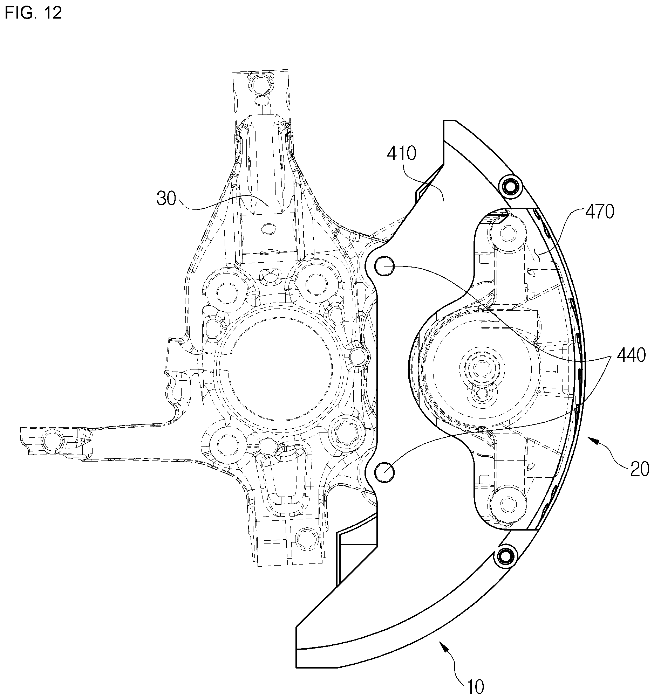

Hereinafter, a further dust capturing device 10 will be described by reference to FIGS. 11 and 12.

FIGS. 11 and 12 are a perspective view and a rear view illustrating a brake caliper to which a dust capturing device is.

Referring to FIGS. 11 and 12, a filter housing 400 of a dust capturing device 10 may include a first filter housing 410 and a second filter housing 420. Optionally, at least a part of the first filter housing 410 may be disposed inside a vehicle body and at least a part of the second filter housing 420 may be disposed outside the vehicle body.

Since some of the structures, functions and operations of the dust capturing device, which will be described below, are the same as or similar to those described above, certain descriptions overlapped with the dust capturing devices described above will be omitted to prevent duplicated descriptions.

At least a part of the filter housing 400 is disposed to face an outer circumferential surface of the disc 50. For instance, the filter housing 400 is disposed to be spaced apart from the outer circumferential surface of the disc 50 in the radial direction. A cross-section of the filter housing 400 may be substantially "U" or "V" shaped to surround at least a part of an outer side of the outer circumferential surface of the disc 50 in the radial direction and at least a part of the first or inner surface and the second or outer surface of the disc 50. The filter housing 400 may have an outer circumferential surface facing the outer circumferential surface of the disc 50, and opposite sidewall surfaces facing the first surface and the second surface of the disc 50, respectively. The filter housing 100 may be divided into a first filter housing 110 and a second filter housing 120 formed by separate pieces. A detailed description thereof will be provided below.

The filter housing 400 may be directly or indirectly mounted on or to a fixing part of the axle mounting structure, a fixture or a part of the vehicle or a body of the vehicle. For example, the fixing part may be a knuckle 30 of the vehicle on or to which the caliper housing 20 is mounted as illustrated in FIG. 12. A knuckle coupling hole 440 into which a fastening member or fastener such as a bolt may be inserted may be provided in the first filter housing 410 which will described below. FIG. 12, by way of example only, shows a pair of knuckle coupling holes 440 formed in the first filter housing 410.

The filter housing 400 may include the first filter housing 410 which may, optionally, be disposed inside the vehicle body, and the second filter housing 420 which may, optionally, be disposed outside the vehicle body.

At least a part of the first filter housing 410 may optionally be disposed inside the vehicle body. The first filter housing 410 may include an inner wall surface facing the first or inner surface of the disc 50 and the outer circumferential surface facing the outer circumferential surface of the disc 50. At least a part of the second filter housing 420 may, optionally, be disposed outside the vehicle body. The second filter housing may include an outer wall surface facing the second or outer surface of the disc 50 and an outer circumferential surface facing the outer circumferential surface of the disc 50. The first filter housing 410 and the second filter housing 420 may be coupled to each other to form a body such as a single piece body in which the filter module 200 is accommodated and supported and formed in a shape of surrounding or covering at least a part of the inner surface, the outer surface, and the outer circumferential surface of the disc 50.

The first filter housing 410 and the second filter housing 420 may be substantially arc-shaped. For example, the first and the second filter housing 410, 420 may have a shape substantially corresponding to a shape of the disc 50. The first filter housing 410 and the second filter housing 420 may be formed to extend in the radial direction of the disc 50 and extend or expand to cover a leading part and a trailing part side of the caliper housing 20. The trailing part may be an end portion of the caliper housing 20 towards the rotating direction of the disc 50, and the leading part may be an opposite end part of the caliper housing 20. That is, generally, the trailing part and the leading part may be opposite end portions of the caliper housing 20 with respect to the circumferential direction. Accordingly, the brake caliper can be safely covered, and a space in which the filter module 200 is mounted can expand to more effectively capture dust. The first filter housing 410 and the second filter housing 420 may be coupled to each other using any means, for example, but not limited to, a fastener such as a bolt or the like. Further, first filter housing 410 and the second filter housing 420 may be mounted on or to the vehicle body through the first filter housing 110 fixed to a fixing part of the axle mounting structure, a fixture or a part of the vehicle or a body of the vehicle.

At least any one of the first filter housing 410 and the second filter housing 420 may include a maintenance hole 470 through which a portion of the caliper housing 20 is exposed and/or accessible. As described above, in the brake caliper, various components such as a pressing member, e.g., in the form of a piston installed to move forward or backward, a bolt which couples the caliper housing 20 and an actuator, and a guide rod which movably couples the caliper housing 20 and a carrier may be installed in the caliper housing 20, and the maintenance hole 470 may be formed to pass through any one of the filter housings 410 and 420 so that the brake caliper can be maintained without dissembling the filter housing 400 through the maintenance hole 470, for example, when the brake caliper is failed or checked. In FIG. 12, it is illustrated that the maintenance hole 470 is provided in the first filter housing 410, but a plurality of maintenance holes 470 may be provided in various portions in the first filter housing 410 and/or the second filter housing 420 as long as it is adjacent to components that are frequently replaced and checked.

The brake calipers as described above can reliably capture dust caused or generated by friction between a disc and a brake pad.

The brake calipers as described above can suppress and minimize external spread of dust caused or generated by friction between a disc and a brake pad.

The brake calipers as described above ease of maintenance because a filter module may be detachably attached to the brake caliper.

The brake calipers as described above can improve the marketability and competitiveness of a vehicle.

The brake calipers as described above may have a simple structure so that productivity and assembly of a product can be improved.

## Claims

1. A brake caliper for a disc brake, comprising:
a caliper housing (20) configured to cover at least a part of a disc (50);
at least one brake pad, wherein at least a part of the brake pad is disposed in the caliper housing (20); and
a dust capturing device (10) configured to capture dust from the brake pad, the dust capturing device (10) including a filter housing (100, 400) disposed to cover at least a part of an outer circumferential surface of the disc (50) and a filter module (200) coupled to the filter housing (100, 400).

2. The brake caliper of claim 1, wherein the filter module (200) is snap-coupled to the filter housing (100).

3. The brake caliper of claim 2, wherein the filter module (200) includes:
a filter member (250) comprising a filter; and
a cage in which the filter member (250) is supported.

4. The brake caliper of claim 3, wherein:
the filter module (200) has at least one clip (230) protruding from the cage; and
the filter housing (100) has a clip groove (130) formed in a surface of the filter housing (100), and the clip (230) of the filter module (200) is inserted into the clip groove (130) of the filter housing (100) to couple the filter module (200) and the filter housing (100).

5. The brake caliper of claim 3 or 4, wherein the cage of the filter module (200) has a plurality of holes for air flow.

6. The brake caliper of any one claims 3 to 5, wherein:
the cage of the filter module (200) includes a first cage part (210) configured to form an outer side surface of the cage in a radial direction, and a second cage part (220) configured to form an inner side surface of the cage in the radial direction; and
the filter member (250) is disposed between the first cage part (210) and the second cage part (220).

7. The brake caliper of claim 6, wherein the first cage part (210) and the second cage part (220) are snap-coupled.

8. The brake caliper of claim 6 or 7, wherein the first cage part (210) and the second cage part (220) have a plurality of holes for air flow.

9. The brake caliper of claim 1, wherein:
the filter housing (400) includes a first filter housing (410) and a second filter housing (420);and
the first filter housing (410) and the second filter housing (420) are formed to extend toward a leading part and a trailing part of the caliper housing (20).

10. The brake caliper of claim 9, wherein at least one of the first filter housing (410) and the second filter housing (420) includes a maintenance hole (470) formed to be open such that a part of an outer surface of the caliper housing (20) is exposed outside the filter housing (400).

11. The brake caliper of claim 1, wherein the filter module (200) and the filter housing (100) have a slide-coupling to be coupled to each other.

12. The brake caliper of claim 11, wherein the filter module (200) includes:
a filter member (250) comprising a filter; and
a cage in which the filter member (250) is supported.

13. The brake caliper of claim 12, wherein:
the cage of the filter module (200) includes a slide groove (240) formed in a surface of the cage, and
the filter housing (100) comprises a filter accommodation part (150) having an edge inserted in the slide groove (240) of the cage of the filter module (200).

14. The brake caliper of claim 13, wherein:
the filter housing (100) includes a first filter housing (110) and a second filter housing (120);
the filter accommodation part (150) is formed in the first filter housing (110) and/or in the second filter housing (120);
at least a part of the slide groove (240) of the cage of the filter module (200) is coupled to an edge of the filter accommodation part (150) formed at one or both of the first filter housing (110) and the second filter housing (120).

15. The brake caliper of any one of the preceding claims, wherein the filter module (200) is provided as a plurality of filter modules (200).
